# EUROPÄISCHE PATENTSCHRIFT

(11) **EP 0 702 639 B1**
(45) Veröffentlichungstag und Bekanntmachung des Hinweises auf die Patenterteilung: **20.08.1997**
(21) Anmeldenummer: 94918870.0
(22) Anmeldetag: 14.06.1994
(51) Int. Cl.: B62D 5/08

(54) **HILFKRAFTLENKUNG FÜR KRAFTFAHRZEUGE**
SERVO-ASSISTED STEERING SYSTEM
DIRECTION ASSISTEE POUR AUTOMOBILES

(30) Priorität: 16.06.1993 DE 4319891
(43) Veröffentlichungstag der Anmeldung: 27.03.1996
(73) Patentinhaber: ZF FRIEDRICHSHAFEN Aktiengesellschaft, 88038 Friedrichshafen (DE)
(72) Erfinder: LANG, Armin, D-73529 Schwäbisch Gmünd (DE); KNÖDLER, Helmut, D-73547 Lorch (DE)
(86) Internationale Anmeldenummer: EP9401931
(87) Internationale Veröffentlichungsnummer: WO9429158

(56) Entgegenhaltungen:
- DE-A- 4 126 020
- GB-A- 662 724

## Beschreibung

Die Erfindung betrifft eine Hilfskraftlenkung für Kraftfahrzeuge nach dem Oberbegriff des Anspruchs 1. Die Hilfskraftlenkung enthält ein Lenkventil, das zwei Einlaß-Sitzventile und zwei Auslaß-Sitzventile aufweist, die über eine Betätigungseinrichtung in Abhängigkeit von einer Drehbewegung einer Lenkspindel verstellbar sind. Die Schließkörper der Auslaß-Sitzventile sind über deren Betätigungsstößel durch die Kraft von Zentrierfedern in Richtung auf die Betätigungseinrichtung beaufschlagbar, so daß die Betätigungsstößel an der Betätigungseinrichtung anliegen. Dabei sind die Schließkörper der Einlaß-Sitzventile durch die Kraft von Druckfedern in Schließrichtung beaufschlagbar, so daß die Einlaß-Sitzventile in der Neutralstellung des Lenkventils geschlossen sind. Die Auslaß-Sitzventile sind in er Neutralstellung des Lenkventils geöffnet. Die Einlaß-Sitzventile werden erst nach dem Schließen des jeweiligen zugehörigen Auslaß-Sitzventils geöffnet.

Eine derartige Hilfskraftlenkung mit geschlossener Mitte ist bekannt aus der DE-A1-41 26 020. Eine solche Hilfskraftlenkung weist einen linearen Kennlinienverlauf auf. Dies bedeutet, daß bei hohen Servodrücken das Betätigungsmoment stark ansteigen kann.

Bei heute gebräuchlichen Hilfskraftlenkungen mit offener Mitte ist es jedoch üblich, das Betätigungsmoment ab einem bestimmten Druck im Servomotor nur noch unwesentlich zu erhöhen. Dies bedeutet, daß die Kennlinie ab diesem bestimmten Punkt steiler verläuft. Man nennt diesen Effekt "Abschneidung" oder "Betätigungsmomentbegrenzung".

Der Erfindung liegt die Aufgabe zugrunde, eine gattungsgemäße Hilfskraftlenkung, d. h. eine Hilfskraftlenkung mit geschlossener Mitte, derart zu verbessern, daß mit ihrem Lenkventil Kennlinien erzeugt werden können, die in ihrer Form den Kennlinien heute gebräuchlicher Hilfskraftlenkungen mit offener Mitte möglichst nahe kommen.

Diese Aufgabe wird durch die im Anspruch 1 gekennzeichnete Hilfskraftlenkung gelöst. Die Lösung erfolgt insbesondere dadurch, daß bei einer gattungsgemäßen Hilfskraftlenkung für jede Seite des Lenkventils ein Begrenzungskolben vorgesehen ist, der einerseits von dem in einem Arbeitsraum eines Servomotors herrschenden Druck und andererseits von einer Begrenzungsfeder beaufschlagt ist. Die Begrenzungsfeder hält in Neutralstellung des Lenkventils den Begrenzungskolben in einem Abstand von dem Schließkörper des Einlaß-Sitzventils. Dadurch werden ab einem bestimmten Servodruck die mechanischen Zentrierkräfte des Lenkventils reduziert. Der Begrenzungskolben wirkt dann auf den Schließkörper des Einlaß-Sitzventils ein, wenn die Kraft des auf den Begrenzungskolben wirkenden Druckes die Kraft der Begrenzungsfeder übersteigt. Wesentlich ist dabei, daß der Begrenzungskolben auf den Schließkörper des Einlaß-Sitzventils wirkt und nicht auf den Schließkörper des Auslaß-Sitzventils. Dadurch wird erreicht, daß beim Zurücklenken eine Ventilkennlinie entsteht, nach der beim Absinken des Druckes im Servomotor das Betätigungsmoment am Lenkhandrad stetig abnimmt.

Die Funktion des Begrenzungskolbens wird dadurch verbessert, daß der Querschnitt des Begrenzungskolbens kleiner ausgeführt ist als der Querschnitt des Schließkörpers des Einlaß-Sitzventils.

Zweckmäßige und vorteilhafte Ausgestaltungen der Erfindung sind in den Unteransprüchen angegeben.

In einer bevorzugten Ausführungsform wird der Begrenzungskolben durch die Begrenzungsfeder in der Neutralstellung des Lenkventils in Anlage an einer Anschlagschulter eines Ventilgehäuses gehalten. Dadurch läßt sich der Druck, bei dem der Begrenzungskolben anfängt sich zu bewegen, genau definieren. Außerdem wird der Begrenzungskolben in der Neutralstellung stabilisiert, so daß ein eventuell mögliches "Flattern" des Begrenzungskolbens verhindert wird.

Eine konstruktiv besonders einfache und günstige Lösung ergibt sich dann, wenn jeder Begrenzungskolben an seiner dem Schließkörper des Einlaß-Sitzventils zugewandten Stirnseite axial gerichtete Fortsätze aufweist, mit denen ein Kontakt zu diesem Schließkörper hergestellt werden kann.

Im folgenden wird die Erfindung anhand eines in der Zeichnung dargestellter Ausführungsbeispieles näher erläutert.
Es zeigen:
- Fig. 1: einen Längsschnitt durch das Lenkventil der erfindungsgemäßen Hilfskraftlenkung mit schematisch dargestellten Aggregaten der Lenkung;
- Fig. 2: eine Ventilkennlinie der erfindungsgemäßen Hilfskraftlenkung.

Die erfindungsgemäße Hilfskraftlenkung enthält ein Lenkventil 1. Das Lenkventil 1 steuert das Druckmittel, das von einer nicht dargestellten Servopumpe gefördert und zweckmäßigerweise in einem Speicher 2 gespeichert wird, zu und von den Arbeitsräumen 3 und 4 eines Servomotors 5 und zurück zu einem Druckmittelbehälter 6. Das Lenkventil 1 enthält zwei Einlaß-Sitzventile 7 und 8 und zwei Auslaß-Sitzventile 10 und 11. Jeweils ein Einlaß-Sitzventil 7 bzw. 8 und ein Auslaß-Sitzventil 10 bzw. 11 sind koaxial zueinander angeordnet.

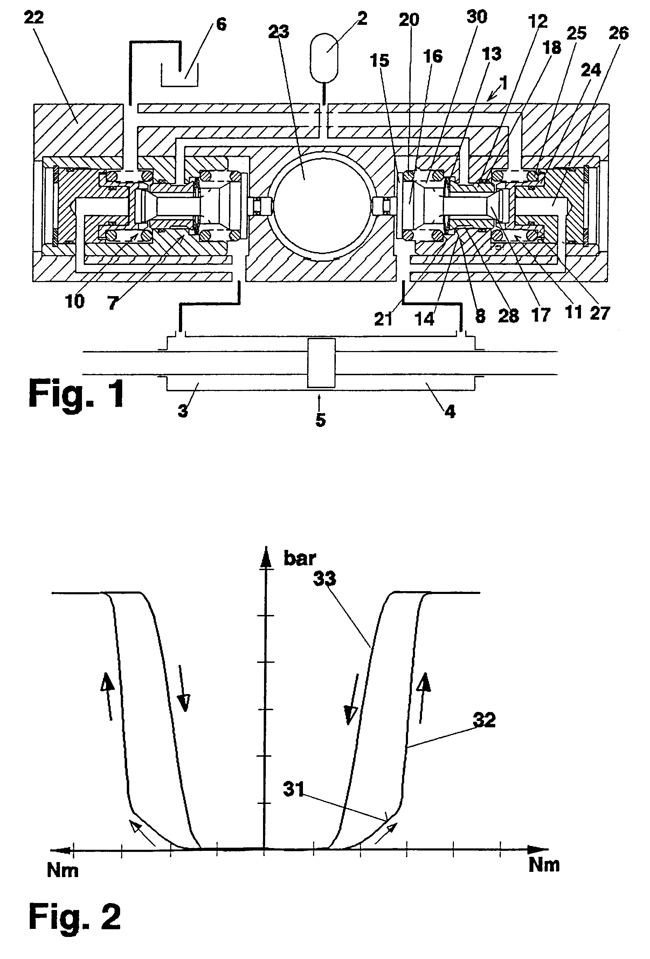

Die beiden Teile des Lenkventils 1 mit je einem Einlaß-Sitzventil 7 bzw. 8 und je einem Auslaß-Sitzventil 10 bzw. 11 sind im wesentlichen gleich ausgebildet. Der genauere Aufbau des Lenkventils 1 wird deshalb im folgenden anhand nur eines Teiles - in Fig. 1 der rechte Teil - des Lenkventils 1 mit dem Einlaß-Sitzventil 8 und dem Auslaß-Sitzventil 11 beschrieben.

In der Neutralstellung des Lenkventils 1 ist das Einlaß-Sitzventil 8 geschlossen. Dies wird dadurch erreicht, daß dessen Schließkörper 12 durch die Kraft einer Druckfeder 13 in der Form von Tellerfedern in Schließrichtung gegen einen gehäusefesten Ventilsitz 14 beaufschlagbar ist. Die Druckfeder 13 stützt sich einerseits an dem Schließkörper 12 und andererseits an einem Absatz eines Betätigungsstößels 16 ab. An dem Betätigungsstößel 16 ist ein Schließkörper 17 des Auslaß-Sitzventils 11 ausgebildet, der mit einem an dem Schließkörper 12 angeordneten Ventilsitz 18 zusammenwirkt.

Der Betätigungsstößel 16 wird durch die Kraft einer Zentrierfeder 20, die sich einerseits an einem Bund 15 des Betätigungsstößels 16 und andererseits an einer Schulter 21 eines Ventilgehäuses 22 abstützt, in Anlage gehalten an einer Betätigungseinrichtung 23. Die Betätigungseinrichtung 23 kann in Abhängigkeit von einer Drehbewegung einer nicht dargestellten Lenkspindel bewegt werden. Die Betätigungseinrichtung 23 steht beispielsweise in trieblicher Verbindung mit einem nicht dargestellten Ritzel einer Zahnstangenlenkung.

Zusätzlich zu dem Einlaß-Sitzventil 8 und dem Auslaß-Sitzventil 11 ist ein Begrenzungskolben 24 vorgesehen. Der Begrenzungskolben 24 ist auf seiner einen Seite, die dem Einlaß-Sitzventil 8 und dem Auslaß-Sitzventil 11 zugewandt ist, von einer Begrenzungsfeder 25 beaufschlagt. Auf seiner anderen Seite ist der Begrenzungskolben 24 von einem Druck beaufschlagt, der in einem angrenzenden Begrenzungsraum 26 herrscht. Der Begrenzungsraum 26 ist verbunden mit dem Arbeitsraum 4 des Servomotors 5, so daß in dem Begrenzungsraum 26 jeweils der gleiche Druck herrscht wie in dem Arbeitsraum 4. In der Neutralstellung des Lenkventils ist die Kraft der Begrenzungsfeder 25 größer als die Kraft des in dem Begrenzungsraum 26 herrschenden Druckes. Damit wird der Begrenzungskolben 24 in der Neutralstellung des Lenkventils 1 in Anlage gehalten an einer Anschlagschulter 27 des Ventilgehäuses 22. Zwischen dem Begrenzungskolben 24 und dem Schließkörper 12 des Einlaß-Sitzventils 8 besteht in der Neutralstellung des Lenkventils ein Abstand, der erst dann überbrückt wird, wenn der Begrenzungskolben 24 durch den in dem Begrenzungsraum 26 herrschenden Druck gegen die Kraft der Begrenzungsfeder 25 in Richtung auf den Schließkörper 12 verschoben wird. Der wirksame Querschnitt des Begrenzungskolbens 24, der von dem in dem Begrenzungsraum 26 herrschenden Druck beaufschlagt wird, ist kleiner als der wirksame Querschnitt des Schließkörpers 12 des Einlaß-Sitzventils 8.

Der Speicher steht über entsprechende Kanäle mit einer Zulaufkammer 28 in Verbindung, die an dem Einlaß-Sitzventil 8 angeordnet ist. Eine Kammer 30, die die Zentrierfeder 20 enthält und die in der Neutralstellung des Lenkventils 1 von der Zulaufkammer 28 getrennt ist, steht mit dem Arbeitsraum 4 des Servomotors 5 in Verbindung, so daß in der Kammer 30 der gleiche Druck herrscht wie in dem Begrenzungsraum 26. Die Kammer 30 steht außerdem über das in der Neutralstellung des Lenkventils 1 offene Auslaß-Sitzventil 11 und entsprechende Kanäle mit dem Druckmittelbehälter 6 in Verbindung.

Im folgenden wird die Funktion der erfindungsgemäßen Hilfskraftlenkung beschrieben: Wird durch eine Drehung des nicht dargestellten Lenkhandrades die Betätigungseinrichtung 23 beispielsweise nach links bewegt, so schließt zunächst das Auslaß-Sitzventil 11. Der Schließkörper 17 des Auslaß-Sitzventils 11 nimmt bei seiner weiteren Bewegung den Schließkörper 12 des Einlaß-Sitzventils 8 mit, so daß dieses Ventil öffnet. Das unter Druck stehende Druckmittel strömt aus der Zulaufkammer 28 in die Kammer 30 und damit sowohl in den Arbeitsraum 4 als auch in den Begrenzungsraum 26. Der in der Kammer 30 herrschende Druck wirkt als Rückwirkungsdruck auf den Schließkörper 12 des Einlaß-Sitzventils 8 und wirkt damit der Betätigungskraft der Betätigungseinrichtung 23 entgegen. Dieser Druck herrscht gleichzeitig in dem Begrenzungsraum 26 und drückt den Begrenzungskolben 24 gegen die Kraft der Begrenzungsfeder 25 in Fig. 1 nach links. Überschreitet diese Druckkraft die Vorspannkraft der Begrenzungsfeder 25, so bewegt sich der Begrenzungskolben 24 nach links und drückt auf den Schließkörper 12 des Einlaß-Sitzventils 8. Dadurch verringert sich der wirksame Querschnitt an dem Schließkörper 12 um den Querschnitt des Begrenzungskolbens 24 und die Rückwirkungskraft vermindert sich entsprechend.

Steigt der Druck im Arbeitsraum 4 und damit in der Kammer 30 so weit an, daß die Kraft auf den Schließkörper 12 vermindert um die Kraft auf den Begrenzungskolben 24 die Vorspannkraft der Zentrierfeder 20 übersteigt, so hebt der Betätigungsstößel 16 von der Betätigungseinrichtung 23 ab. Danach findet keine weitere Drucksteigerung mehr statt.

Wird anschließend die Kraft an der Betätigungseinrichtung 23 vermindert, so bleibt der Druck in dem Arbeitsraum 4 so lange eingesperrt, bis die hydraulische Kraft an dem Schließkörper 17 des Auslaß-Sitzventils 11 die mechanische Schließkraft überwindet und das Auslaß-Sitzventil 11 öffnet.

Dadurch ergibt sich eine Ventilkennlinie, wie sie in Fig. 2 dargestellt ist. Ein erster Einlenkast 31 entspricht dem Querschnitt des Schließkörpers 12 des Einlaß-Sitzventils 8. Ein zweiter Einlenkast 32 entspricht der Differenz aus dem Querschnitt des Schließkörpers 12 des Einlaß-Sitzventils 8 und dem Querschnitt des Begrenzungskoklbens 24. Ein Rücklenkast 33 entspricht dem Querschnitt des Schließkörpers 17 des Auslaß-Sitzventils 11. Der wirksame Querschnitt des Betätigungsstößels 16 bleibt dabei unberücksichtigt.

### Bezugszeichen

- 1: Lenkventil
- 2: Speicher
- 3: Arbeitsraum
- 4: Arbeitsraum
- 5: Servomotor
- 6: Druckmittelbehälter
- 7: Einlaß-Sitzventil
- 8: Einlaß-Sitzventil
- 9: -
- 10: Auslaß-Sitzventil
- 11: Auslaß-Sitzventil
- 12: Schließkörper von 8
- 13: Druckfeder
- 14: Ventilsitz
- 15: Bund
- 16: Ventilstößel
- 17: Schließkörper von 11
- 18: Ventilsitz
- 19: -
- 20: Zentrierfeder
- 21: Schulter
- 22: Ventilgehäuse
- 23: Betätigungseinrichtung
- 24: Begrenzungsraum
- 25: Begrenzungsfeder
- 26: Begrenzungsraum
- 27: Anschlagschulter
- 28: Zulaufkammer
- 29: -
- 30: Kammer
- 31: erster Einlenkast
- 32: zweiter Einlenkast
- 33: Rücklenkast

## Patentansprüche

1. Hilfskraftlenkung für Kraftfahrzeuge, mit einem Lenkventil (1), das zwei Einlaß-Sitzventile (7, 8) und zwei Auslaß-Sitzventile (10, 11) aufweist, die über eine Betätigungseinrichtung (23) in Abhängigkeit von einer Drehbewegung einer Lenkspindel verstellbar sind,
- wobei die Schließkörper (17) der Auslaß-Sitzventile (10, 11) und deren Betätigungsstößel (16) durch die Kraft von Zentrierfedern (20) in Richtung auf die Betätigungseinrichtung (23) beaufschlagt sind, so daß die Betätigungsstößel (16) an der Betätigungseinrichtung (23) anliegen,
- wobei die Schließkörper (12) der Einlaß-Sitzventile (7, 8) durch die Kraft von Druckfedern (13) in Schließrichtung beaufschlagbar und dadurch in der Neutralstellung des Lenkventils (1) geschlossen sind,
- wobei die Auslaß-Sitzventile (10, 11) in der Neutralstellung des Lenkventils (1) geöffnet sind und
- wobei die Einlaß-Sitzventile (7, 8) erst nach dem Schließen des jeweiligen zugehörigen Auslaß-Sitzventils (10, 11) geöffnet werden und dann auf den Schließkörper (12) des offenen Einlaß-Sitzventils (7, 8) der in einem Arbeitsraum (3, 4) eines Servomotors (5) herrschende Druck wirkt,
dadurch **gekennzeichnet,**
- daß für jede Seite des Lenkventils (1) ein Begrenzungskolben (24) vorgesehen ist,
- daß jeder Begrenzungskolben (24) einerseits von dem in einem Arbeitsraum (3, 4) des Servomotors (5) herrschenden Druck und andererseits von einer Begrenzungsfeder (25) beaufschlagt ist, die in Neutralstellung des Lenkventils (1) den Begrenzungskolben (24) in einem Abstand von dem Schließkörper (12) des Einlaß-Sitzventils (8) hält,
- daß der Begrenzungskolben (24) dann an dem Schließkörper (12) des Einlaß-Sitzventils (8) anliegt und auf diesen in Öffnungsrichtung des Schließkörpers (12) einwirkt, wenn die Kraft des auf den Begrenzungskolben (24) wirkenden Druckes die Kraft der Begrenzungsfeder (25) übersteigt und
- daß der Querschnitt des Begrenzungskolbens (24) kleiner ist als der wirksame Querschnitt des Schließkörpers (12) des Einlaß-Sitzventils (8).

2. Hilfskraftlenkung nach Anspruch 1, dadurch **gekennzeichnet,** daß jeder Begrenzungskolben (24) andererseits von einer Begrenzungsfeder (25) beaufschlagt ist, die in Neutralstellung des Lenkventils (1) den Begrenzungskolben (24) an eine Anschlagschulter (27) eines das Lenkventil (1) aufnehmenden Ventilgehäuses (22) anlegt.

3. Hilfskraftlenkung nach einem der Ansprüche 1 oder 2, dadurch **gekennzeichnet,** daß jeder Begrenzungskolben (24) an seiner dem Schließkörper (12) des Einlaß-Sitzventils (8) zugewandten Stirnseite axial gerichtete Fortsätze aufweist, mit denen ein Kontakt zu diesem Schließkörper (12) herstellbar ist.

## Claims

1. Power-assisted steering system for motor vehicles, having a steering valve (1) comprising two inlet seat valves (7, 8) and two outlet seat valves (10, 11) which are adjustable by means of an operating device (23) in dependence upon a rotary movement of a steering spindle,
- wherein the closing bodies (17) of the outlet seat valves (10, 11) and their operating plungers (16) are loaded by the force of centring springs (20) in the direction of the operating device (23) so that the operating plungers (16) rest against the operating device (23),
- wherein the closing bodies (12) of the inlet seat valves (7, 8) are loadable by the force of pressure springs (13) in closing direction and are therefore closed in the neutral position of the steering valve (1),
- wherein the outlet seat valves (10, 11) are open in the neutral position of the steering valve (1) and
- wherein the inlet seat valves (7, 8) are opened only after closure of the respective associated outlet seat valve (10, 11) and then the pressure prevailing in a working chamber (3, 4) of a servomotor (5) acts upon the closing body (12) of the open inlet seat valve (7, 8),
characterized in
- that a limiting piston (24) is provided for each side of the steering valve (1),
- that each limiting piston (24) is acted upon, on the one hand, by the pressure prevailing in a working chamber (3, 4) of the servomotor (5) and, on the other hand, by a limiting spring (25) which, in the neutral position of the steering valve (1), holds the limiting piston (24) at a distance from the closing body (12) of the inlet seat valve (8),
- that the limiting piston (24) then rests against the closing body (12) of the inlet seat valve (8) and acts upon the latter in the opening direction of the closing body (12) when the force of the pressure acting upon the limiting piston (24) exceeds the force of the limiting spring (25) and
- that the cross section of the limiting piston (24) is smaller than the effective cross section of the closing body (12) of the inlet seat valve (8).

2. Power-assisted steering system according to claim 1, characterized in that each limiting piston (24) is, on the other hand, acted upon by a limiting spring (25) which, in the neutral position of the steering valve (1), applies the limiting piston (24) against a stop shoulder (27) of a valve housing (22) which receives the steering valve (1).

3. Power-assisted steering system according to one of claims 1 or 2, characterized in that each limiting piston (24) at its end face directed towards the closing body (12) of the inlet seat valve (8) has axially directed extensions, by means of which contact with said closing body (12) may be established.

## Revendications

1. Direction assistée pour véhicules à moteur, comportant une soupape de direction (1) qui est pourvue de deux soupapes d'admission à sièges (7, 8) et de deux soupapes d'échappement à sièges (10, 11) qui peuvent être réglées par l'intermédiaire d'un dispositif d'actionnement (23) en fonction d'une rotation de l'arbre de direction,
- dans laquelle les organes de fermeture (17) des soupapes d'échappement à sièges (10, 11) et leur poussoirs d'actionnement (16) sont poussés dans la direction du dispositif d'actionnement (23) par la force exercée par un ressort de centrage (20), de telle manière que les poussoirs d'actionnement (16) soient en appui contre le dispositif d'actionnement (23),
- dans laquelle les organes de fermeture (12) des soupapes d'admission à sièges (7,8) sont sollicitées par la force d'un ressort d'appui (13) dans le sens de la fermeture et sont de ce fait fermés dans la position neutre de la soupape de direction (1),
- dans laquelle les soupapes d'échappement à sièges (10, 11) sont ouvertes dans la position neutre de la soupape de direction (1), et,
- dans laquelle les soupapes d'admission à sièges (7, 8) ne s'ouvrent qu'après la fermeture des soupapes d'échappement à sièges correspondantes (10,11) et dans laquelle une pression hydraulique présente dans une chambre de travail (3, 4) d'un servomoteur (5) agit sur l'organe de fermeture du siège de la soupape d'admission à siège (7, 8),
**caractérisée** en ce que,
- en ce qu'un piston de limitation (24) est prévu de chaque coté de la soupape de direction,
- en ce que chaque piston de limitation (24) est soumis d'une part à l'action de la pression régnant à l'intérieur de la chambre de travail (3, 4) du servomoteur (5) et d'autre part par un ressort de limitation (25) qui maintient le piston de limitation (24) à distance de l'organe de fermeture (12) de la soupape d'admission (8) dans la position neutre de la soupape de direction,
- en ce que le piston de limitation (24) prend alors appui contre l'organe de fermeture (12) de la soupape d'admission à siège (8) et que l'organe de fermeture (12) agit sur cette dernière dans le sens de l'ouverture, lorsque la force du fluide agissant sur le piston de limitation (24) dépasse la force du ressort de limitation (25), et
- en ce que la section du piston de limitation (24) est inférieure à la section utile de l'organe de fermeture (12) de la soupape d'admission à siège (8).

2. Direction assistée selon la revendication 1, **caractérisée** en ce que chaque piston de limitation (24) est d'autre part sollicité par un ressort de limitation (25) qui se trouve en appui contre un épaulement (27) d'un boîtier (22) récepteur de la soupape de direction (1) lorsque la soupape de direction (1) est dans la position neutre.

3. Direction assistée selon la revendication 1, **caractérisée** en ce que chaque piston de limitation (24) comporte des protubérances dirigées axialement vers la face frontale de l'organe de fermeture (12) de la soupape d'admission à siège (8), pour assurer le contact avec cet organe de fermeture (12).
